# EUROPÄISCHE PATENTANMELDUNG

(11) **EP 0 788 915 A2**
(43) Veröffentlichungstag der Anmeldung: **13.08.1997**
(21) Anmeldenummer: 96109085.9
(22) Anmeldetag: 05.06.1996
(51) Int. Cl.: B60K 15/04

(54) **Einfüllstutzen eines Kunststoff-Brennstoffbehälters für Kraftfahrzeuge**

(30) Priorität: 29.09.1995 DE 19536509
(71) Anmelder: Bayerische Motoren Werke Aktiengesellschaft, 80788 München (DE)
(72) Erfinder: Koppi, Johannes, 80935 München (DE)

(57) **Zusammenfassung**

Der Einfüllstutzen (1) weist einen an dem metallischen Endkragen (3) über einen Fixiertopf (5) befestigten Metalldraht (6) auf, der an der Innenwandung des Einfüllstutzens (1) anliegt und zum Ableiten elektrostatischer Aufladungen dient. Der Endkragen (3) steht mit der Karosserie des Kraftfahrzeugs in metallischer Verbindung. Der Metalldraht (6) kann durch eine Fahrradspeiche gebildet sein.

Die Vorrichtung ist besonders einfach aufgebaut aber dennoch wirksam.

## Beschreibung

Die Erfindung bezieht sich auf einen Einfüllstutzen eines Kunststoff-Brennstoffbehälters für Kraftfahrzeuge nach dem Oberbegriff des Patentanspruches 1.

Bei einem bekannten derartigen Einfüllstutzen (DE 42 14 076 A1) ist zum Ableiten von unerwünschten elektrostatischen Aufladungen im Brennstoffbehälter unmittelbar auf der Oberfläche des Einfüllstutzens oder auch einer darin vorgesehenen Entlüftungsleitung ein elektrisch leitendes Material aufgebracht, das mit einem metallischen Kappenteil am freien Ende des Einfüllstutzens verbunden ist. Das Kappenteil ist mit der Karosserie elektrisch leitend verbunden. Die leitende Oberflächenbeschichtung kann aus einer bestimmten Kunststoffschicht bestehen, die elektrisch leitend gemacht wurde, beispielsweise aus Acetalharz, das leitende Partikel enthält. Es kann auch eine elektrisch leitende Abdeckung als Metallgeflecht vorgesehen werden.

Der Erfindung liegt die Aufgabe zugrunde, einen Einfüllstutzen der vorausgesetzten Bauart zu schaffen, der eine besonders einfache aber dennoch wirksame Einrichtung zum Beseitigen elektrostatischer Ladungen aufweist.

Diese Aufgabe wird erfindungsgemäß durch die im Patentanspruch 1 angegebenen Maßnahmen gelöst.

Weitere vorteilhafte Einzelheiten der Erfindung sind Gegenstand der Unteransprüche.

Der elastische Metalldraht läßt sich relativ einfach an dem metallischen Endkragen, in der Regel an dem Abschnitt des Einfüllstutzens anbringen, der unter anderem auch die Verriegelungsteile eines üblichen Renkverschlusses aufweist. Da der Metalldraht nicht entlang seiner gesamten Längserstreckung fest und zuverlässig mit dem Einfüllstutzen oder dem Entlüftungsrohr verbunden sein muß, braucht bei seiner Anbringung - im Gegensatz zum nächstliegenden Stand der Technik - keine besondere Sorgfalt aufgewendet zu werden. Der Metalldraht kann vorzugsweise an dem mit dem metallischen Endkragen verbundenen üblichen Fixiertopf befestigt werden, so daß im Bedarfsfall keine größeren Umkonstruktionen erforderlich sind. Es kann beispielsweise für den Metalldraht eine übliche Fahrradspeiche verwendet werden, die im Bereich ihres endseitigen Kopfes einen konischen Abschnitt hat, mit dem sie durch Einpressen dieses Abschnitts in eine entsprechend ausgebildete Bohrung des Fixiertopfes zuverlässig an dem Fixiertopf und auch im Hinblick auf ihre Position im Einfüllstutzen befestigt werden kann.

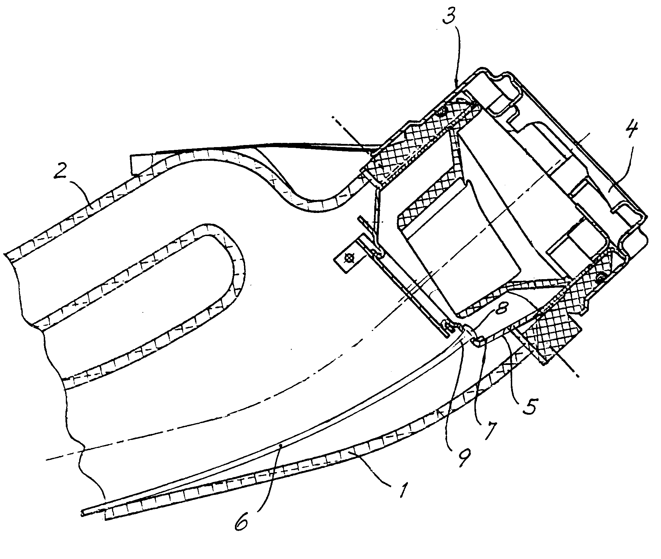

Die Erfindung ist im folgenden anhand eines in der Zeichnung dargestellten Ausführungsbeispiels näher erläutert. Die einzige Zeichnung zeigt einen Querschnitt durch den Einfüllstutzen eines Brennstoffbehälters im Bereich seines freien Endes.

Der aus Kunststoff gefertigte Einfüllstutzen 1 weist eine in seinem äußeren Endbereich abzweigende Entlüftungsleitung 2 auf und ist an seinem freien Ende mit einem metallischen Endkragen 3 versehen. Der Endkragen 3 steht mit der übrigen Karosserie in einer (nicht gezeigten) metallischen Verbindung. Der Endkragen 3 weist am Rand Verschlußelemente 4 auf, die mit entsprechenden federnden Zungen eines (nicht gezeigten) Verschlußdeckels einen Renkverschluß bilden.

An dem Endkragen 3 ist, zum Inneren des Einfüllstutzens 1 hin gerichtet, ein Fixiertopf 5 vorgesehen, durch den eine in den Einfüllstutzen 1 eingeschobene Zapfpistole in ihrer Lage gehalten werden kann.

An dem Endkragen 3 ist - über den Fixiertopf 5 - ein elastischer Metalldraht 6 befestigt, der abschnittsweise mit der Innenwandung des Einfüllstutzens 1 Kontakt hat. Der Metalldraht 6 ist an einem ringförmigen Flächenbereich 7 im Grund des Fixiertopfes 5 befestigt und weist hierzu einen erweiterten Kopf 8 auf, mit dem er an der Wandung des Fixiertopfes 5 anliegt. Wie man erkennt, schließt sich an den Kopf 8 ein konischer Drahtabschnitt 9 an, mit dem der Metalldraht 6 in eine Bohrung des Fixiertopfes 5 eingepreßt ist.

Der Metalldraht 6 kann in vorteilhafter Weise durch eine Fahrradspeiche gebildet sein. Weiterhin kann der Metalldraht 6, bzw. die Fahrradspeiche mehrfach leicht gebogen sein und an mehreren Stellen im Einfüllstutzen 1 anliegen. Wenn beispielsweise der Einfüllstutzen 1 in dem sich links an den dargestellten Abschnitt anschließenden Bereich nach unten gekrümmt ist, kann die Fahrradspeiche in diesem Bereich nochmals fest an der Innenwandung des Einfüllstutzens anliegen und für eine gute Ableitung von eventuell vorkommenden elektrostatischen Aufladungen sorgen.

## Patentansprüche

1. Einfüllstutzen eines Kunststoff-Brennstoffbehälters für Kraftfahrzeuge, mit einer Einrichtung zum Beseitigen elektrostatischer Ladungen, die eine elektrische Leitungsverbindung vom Inneren des Einfüllstutzens zu dessen metallischem, mit der Karosserie verbundenen Endkragen herstellt,
dadurch gekennzeichnet, daß an dem Endkragen (3) ein elastischer Metalldraht (6) befestigt ist, der zumindest abschnittsweise mit der Innenwandung des Einfüllstutzens (1) Kontakt hat.

2. Einfüllstutzen nach Anspruch 1,
dadurch gekennzeichnet, daß der Metalldraht (6) an einem mit dem Endkragen (3) verbundenen Fixiertopf (5) befestigt ist.

3. Einfüllstutzen nach Anspruch 2,
dadurch gekennzeichnet, daß der Metalldraht (6) an einem ringförmigen Flächenbereich (7) im Grund des Fixiertopfes (5) befestigt ist.

4. Einfüllstutzen nach Anspruch 2 oder 3,
dadurch gekennzeichnet, daß der Metalldraht (6) mit einem erweiterten Kopf (8) an der Wandung des Fixiertopfes (5) anliegt.

5. Einfüllstutzen nach Anspruch 4,
dadurch gekennzeichnet, daß sich an den Kopf (8) ein konischer Drahtabschnitt (9) anschließt, mit dem der Metalldraht (6) in eine Bohrung des Fixiertopfes (5) eingepreßt ist.

6. Einfüllstutzen nach Anspruch 1,
dadurch gekennzeichnet, daß der Metalldraht (6) eine Fahrradspeiche ist.

7. Einfüllstutzen nach Anspruch 1,
dadurch gekennzeichnet, daß der Metalldraht (6) mehrfach leicht gebogen ist und an mehreren Stellen im Einfüllstutzen (1) anliegt.
